(19) Europäisches Patentamt
European Patent Office
Office européen des brevets

(11) Veröffentlichungsnummer: **0 068 311**
**B1**

(12) # EUROPÄISCHE PATENTSCHRIFT

(45) Veröffentlichungstag der Patentschrift: **06.02.85**

(51) Int. Cl.[4]: **C 01 G 49/00,** C 09 C 1/40

(21) Anmeldenummer: **82105282.6**

(22) Anmeldetag: **16.06.82**

(54) **Plättchenförmige Pigmente auf Basis von Eisenoxyd, deren Herstellung und Verwendung.**

(30) Priorität: **24.06.81 DE 3124746**

(43) Veröffentlichungstag der Anmeldung: **05.01.83 Patentblatt 83/1**

(45) Bekanntmachung des Hinweises auf die Patenterteilung: **06.02.85 Patentblatt 85/6**

(84) Benannte Vertragsstaaten: **BE DE FR GB IT NL**

(56) Entgegenhaltungen:
**EP - A - 0 014 382**

**CHEMICAL ABSTRACTS, Band 85, Nr.2, 12. Juli 1976, Seite 103, Zusammenfassung Nr.7328b, Columbus, Ohio (US), M. HURUKAWA et al.: "Preparation of pigments by a coprecipitation method. I. Coprecipitation of aluminum compounds with iron (III) compounds by sodium hydroxide"**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Ostertag, Werner, Dr., Oberer-Bergel-Weg 2, D-6718 Gruenstadt (DE)**
Erfinder: **Bittler, Knut, Dr., Kardinal-Wendel-Strasse 54, D-6720 Speyer (DE)**
Erfinder: **Bock, Gustav, Dr., Waldstrasse 16, D-6730 Neustadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 068 311 B1

ACTORUM AG

**Beschreibung**

Die vorliegende Erfindung betrifft anorganische plättchenförmige Pigmente, die in die Klasse der anorganischen Effektpigmente einzureihen sind. Mit den Spiegelflächen der einzelnen, im Bindemittel orientierten Pigmentkörner lassen sich hoher Glanz und metallic-artige Effekte in Lacken, Kunststoffen und Glas erzeugen.

Beschichtungen mit Metallic-Effekten nehmen an Beliebtheit, z.B. bei Autolackierungen, ständig zu. Solche Farblacke wurden bisher durch Kombination von plättchenförmigen Aluminiumpigmenten mit einem oder mehreren transparenten Farbpigmenten erzeugt. Infolge der mangelnden Korrosionsbeständigkeit der Aluminiumplättchen können solche Lacke aber leicht erblinden. Ein weiterer Nachteil bei der Herstellung solcher Lakke ist auf die verschiedenen Dispergiergeschwindigkeiten der einzelnen Pigmente zurückzuführen sowie auf die Tatsache, dass die Aluminiumplättchen durch die bei der Dispergierung auftretenden Scherkräfte leicht verformt werden.

Es besteht daher ein erhebliches Interesse, zur Erzielung von Metallic-Effekten in Beschichtungen ein Pigment bereitzustellen, das sowohl die Funktion der Aluminiumpigmente als auch der transparenten Pigmente übernehmen kann.

Solche Pigmente anorganischer Natur sind in Gestalt von plättchenförmigem Hämatit seit langem bekannt. Er kommt in der Natur als sogenannter Eisenglimmer vor und wird vor allem als Korrosionsschutzpigment eingesetzt. Es ist aber auch bekannt, glimmerartige $Fe_2O_3$-Pigmente synthetisch herzustellen, wobei Eisenhydroxid oder Eisenoxidhydrat bei Temperaturen oberhalb von 100°C einer hydrothermalen Behandlung unterzogen und in $\alpha$-$Fe_2O_3$ übergeführt wird (vgl. FR-A Nr. 638200, DE-C Nrn. 541768, 658020, DE-A Nr. 2056042, GB-A Nr. 2028784 und DE-A Nr. 3019404). Je nach den gewählten Verfahrensbedingungen fallen die so hergestellten synthetischen $\alpha$-$Fe_2O_3$-Pigmentkörner in unterschiedlicher Form und Grösse und somit auch in unterschiedlichen Farbtönen an, die von rotgelb, rot bis zu violett reichen.

In der EP-A Nr. 0014382 sind schliesslich plättchenförmige Eisenoxidpigmente und deren Herstellungsverfahren beschrieben, die 0,1 bis 12 Gew.-% mindestens eines der Oxide der Elemente der IV., V. und/oder VI. Haupt- und/oder der II. Nebengruppe des Periodensystems der Elemente enthalten. Auch diese Pigmente werden in einem Hydrothermalverfahren hergestellt, wobei neben Eisenoxidteilchen in dem Umsetzungsgemisch auch Verbindungen der genannten Elemente zugegen sind. Durch die Gegenwart dieser Elementverbindungen soll es gelingen, das Schichtdickenwachstum und das Wachstum in der Plättchenebene getrennt zu steuern. So wird letzteres vor allem duch den pH-Wert der Suspension bestimmt, während das Dickenwachstum durch die genannten Elemente bzw. Elementverbindungen beeinflusst wird.

Der Farbton von $Fe_2O_3$-Pigmenten wird, entsprechend den bekannten Gesetzmässigkeiten der Physik, von der Korngrösse der Pigmentkörner bestimmt. Wegen der Anisotropie plättchenförmiger Teilchen spielt bei orientiert auf eine Oberfläche aufgetragenen $Fe_2O_3$-Pigmenten bezüglich des Farbtones die Dicke aber auch der Durchmesser der Plättchen die bestimmende Rolle, während für die optischen Effekte, soweit sie sich von der Reflexion des Lichtes an den Spiegelflächen herleiten, unter den geometrischen Faktoren vornehmlich der Durchmesser der Plättchen und die Perfektion der Spiegelebenen massgebend sind.

Während bei den bisher bekannten Verfahren zur Herstellung von plättchenförmigen $\alpha$-$Fe_2O_3$-Pigmenten hauptsächlich auf die Variation des Farbtones Wert gelegt worden ist und die zufällig anfallenden, optischen Effekte mehr oder weniger als mitbestimmt betrachtet und hingenommen worden sind, zeigt sich doch ein erhebliches Interesse an Pigmenten, die sowohl hinsichtlich ihres Farbtones gezielt einstellbar sind, als auch gleichzeitig in ihren optischen Effekten durch Veränderung ihrer Plättchendurchmesser variiert werden können.

Der vorliegenden Erfindung lag daher die Aufgabe zugrunde, plättchenförmige $Fe_2O_3$-Pigmente bereitzustellen, bei denen Farbtöne und optische Effekte gezielt eingestellt werden können, oder in anderen Worten Pigmente, die in gewissen Grenzen unabhängig von Plättchendicke und Plättchendurchmesser einen bestimmten Farbton neben einem bestimmten optischen Effekt aufweisen.

Diese Aufgabe wird durch plättchenförmige Pigmente der Formel $Al_xFe_{2-x}O_3$, in der x einen Wert von 0,02 bis 0,5 hat, gelöst.

Die plättchenförmigen Pigmente der Formel $Al_x$-$Fe_{2-x}O_3$ sind neu und kommen weder, im Gegensatz zu plättchenförmigem Hämatit, in der Natur vor, noch sind sie bisher auf synthetischem Wege dargestellt worden.

Die Herstellung der neuen Pigmente erfolgt auf hydrothermalem Wege durch Umwandlung von aus Eisen(III)hydroxid oder Eisen(III)oxidhydrat bestehenden wässerigen Suspensionen in Gegenwart von Hydroxiden und/oder Carbonaten der Alkalimetalle, insbsondere des Natriums und/oder Kaliums, und von Natirum- und/oder Kaliumaluminat.

Es ist überraschend, dass nach dem erfindungsgemässen Verfahren eine vollständige Umwandlung der hydroxidischen Eisenverbindungen in oxidische Verbindungen gelingt, obwohl es bekannt war (vgl. DE-C Nr. 658020), dass bei der hydrothermalen Behandlung von Eisenhydroxid dieses nur unvollständig oder sogar überhaupt nicht in das Oxid umgewandelt wird, wenn in dem Reaktionsmedium Spuren von Aluminiumhydroxid zugegen sind und das Reaktionsmedium sonst keine die Kristalltracht beeinflussenden Substanzen erhält.

Die Umsetzung kann am Beispiel von $Al_{0,25}$-$Fe_{1,75}O_3$ gemäss folgender Bilanzgleichung wiedergegeben werden:

$$7\ Fe(OH)_3 + NaAlO_2 \xrightarrow{p\text{-}T[NaOH]\ [NaAlO_2]} 4\ Al_{0,25}Fe_{1,75}O_3 + NaOH + 10\ H_2O$$

Bei der Synthese werden Aluminat, bzw. solche Aluminiumverbindungen, die sich unter Synthesebedingungen in Aluminat überführen lassen, z.B. insbesondere $Al(OH)_3$ oder $Al_2O_3$, in einem deutlichen Überschuss, bezogen auf den jeweils gewünschten Al-Gehalt des Reaktionsproduktes zusammen mit dem Eisenhydroxid bzw. Oxidhydrat vorgelegt.

Das Atomverhältnis Al:Fe in den einzusetzenden Reaktanden, d.h. Aluminat/Eisen-Verbindung, muss grösser sein als das jeweils gewünschte Al/Fe-Atomverhältnis in dem herzustellenden $Al_xFe_{2-x}O_3$-Pigment, wobei mit zunehmendem Alkaligehalt der Suspension der Aluminatanteil zur Erzielung identischer x-Werte gesteigert werden muss. Allgemein kann gesagt werden, dass je Grammatom Fe in der Suspension mindestens 0,2 mol Aluminat zugegen sein müssen. Eine obere Grenze von 5 mol Aluminat pro Grammatom Fe wird im allgemeinen (hoher x-Wert, hoher Alkaligehalt) jedoch nicht überschritten. Durch Erhöhung der Konzentration des gelösten Aluminats in der Suspension nimmt der Durchmesser der Plättchen in der Plättchenebene zu, während die Dicke der Plättchen abnimmt.

Bei der technischen Herstellung der plättchenförmigen $Al_xFe_{2-x}O_3$-Produkte wird so vorgegangen, dass eine wässerige Suspension der Einsatzstoffe hergestellt wird und diese dann in einem Rührautoklaven oder Rohrreaktor erhitzt wird. Nach dem Abkühlen wird das entstandene Pigment von der alkali- und aluminathaltigen wässerigen Lösung abgetrennt, gewaschen, getrocknet und gegebenenfalls schonend gemahlen. Beim Abkühlen oder Verdünnen stark aluminathaltiger abreagierter Suspensionen kann es vorkommen, dass Aluminiumhydroxid bzw. Oxidhydrat auf den Plättchen ausfällt. Durch Waschen mit heisser Natronlauge lässt sich aber das den Kristallen oberflächlich anhaftende Aluminiumoxidhydrat bzw. -hydroxid leicht entfernen. Bei den meisten Anwendungsbereichen ist die Entfernung des Aluminiumoxidhydrats aber gar nicht nötig.

Als Einsatzstoffe für die Herstellung der plättchenförmigen $Al_xFe_{2-x}O_3$-Pigmente kommen die Hydroxide von Eisen und Aluminium wie auch die Oxidhydrate der genannten Elemente in Frage. Im Falle von Eisen ist der Einsatz von Eisenoxidhydrat sogar dem von Eisenhydroxid vorzuziehen, da das pigmentartige FeOOH wesentlich definierter vorliegt und sich in der technischen Handhabung wesentlich günstiger verhält als das gelartige $Fe(OH)_3$. Auch kann $Fe(OH)_3$ meist nicht sehr gut und vollständig salzfrei gewaschen werden, wobei allerdings anzumerken ist, dass das dem Eisenhydroxid anhaftende Salz den oben geschilderten Reaktionsablauf bzw. die Ausbildung plättchenförmigen Produktes nicht beeinträchtigt, sondern zumeist nur bei einer Kreisfahrweise der Lösung stört. Als Eisenoxidhydrateinsatzstoff haben sich alle bekannten kristallographischen Modifikationen ($\alpha$-FeOOH, $\beta$-FeOOH, $\gamma$-FeOOH, etc.) bewährt.

Was den Al-haltigen Einsatzstoff betrifft, so lassen sich ausser Alkalialuminat Aluminiumhydroxid und die bekannten Aluminiumoxidhydrate Böhmit und Bayerit und lösliche Aluminiumsalze einsetzen. Auch Aluminiumoxid kann eingesetzt werden, da es, wie aus dem Bayer-Aufschluss bekannt, bei hydrothermalen Bedingungen in Gegenwart von Alkali in Aluminat übergeführt wird.

Der wässerigen Suspension von Eisen- und Aluminiumhydroxid oder -oxidhydrat wird Alkalihydroxid oder Alkalicarbonat zugesetzt. Die Normalität der Lösung an diesen Verbindungen kann zwischen 0,02-15N liegen. Von höheren Normalitäten ist aus Korrosionsgründen abzusehen. Als Alkalihydroxid oder -carbonat kommen aus Kostengründen in erster Linie NaOH und $Na_2CO_3$ in Frage. Setzt man anstelle von Alkalialuminat Aluminiumverbindungen ein, die durch das Alkali in Aluminat unter den Reaktionsbedingungen übergeführt werden, so ist die hierfür benötigte Alkalimenge zusätzlich in Betracht zu ziehen.

Ein weiterer wichtiger Verfahrensparameter bei der Herstellung von plättchenförmigen $Al_xFe_{2-x}O_3$-Pigmenten ist die Temperatur, da es für jede Suspension von Ausgangsstoffen bestimmter Zusammensetzung bei vorgegebener Zeit eine Minimaltemperatur gibt, unterhalb der die Hydroxide bzw. Oxidhydrate nicht mehr zu Oxiden entwässern. Diese Minimalreaktionstemperatur wird für die jeweiligen Gegebenheiten am besten experimentell ermittelt. Sie liegt, wie eine ganze Reihe von Versuchen zeigte, stets über 170°C. Die Höhe der Mindesttemperatur wird durch viele Einflüsse beeinflusst. So bewirkt beispielsweise eine Erhöhung der NaOH- und Aluminatkonzentration eine Anhebung der Minimalreaktionstemperatur. Zweckmässigerweise wählt man die Reaktionstemperatur im Bereich zwischen 250-360°C, da dieser Temperaturbereich gewährleistet, dass die Reaktion mit einer technisch sinnvollen Geschwindigkeit, d.h. in weniger als z.B. 1 h abläuft.

Wird die Verweilzeit der zur Reaktion gebrachten Suspension erhöht, so lässt sich die Reaktionstemperatur absenken. So kann am Beispiel einer bestimmten Suspension von Ausgangsmaterialien gezeigt werden, dass Reaktionstemperaturen von 310 bzw. 300, 285, 275, 270 und 260°C Verweilzeiten von 1 bzw. 10 min, 2, 10, 20 und 40 h entsprechen.

Ausser Temperatur und Verweilzeit spielt auch die Feststoffkonzentration (Konzentration an Eisenverbindungen) der Suspension der Ausgangsmaterialien noch eine, wenn auch untergeordnetere, Rolle. Im allgemeinen wird die Konzentration der eingesetzten Stoffe so gewählt, dass die Suspension einen Feststoffanteil von 1-20, zweckmässigerweise zwischen 1 und 10 Gew.-%, aufweist. Im Bereich zwischen 1 und 10 Gew.-% liegen die Fliesseigenschaften der Suspension der Einsatzstoffe so, dass die Suspension sich ohne Schwierigkeiten technisch handhaben lässt.

Der äussere Habitus der plättchenförmigen $Al_xFe_{2-x}O_3$-Pigmente ist sehr unterschiedlich. Die

einzelnen Pigmentplättchen können schuppig, d.h. ohne regelmässige Gestalt, als sechseckige Plättchen oder tafelförmig anfallen. Stets sind sie durch ein hohes Durchmesser-zu-Dicken-Verhältnis und durch im Rasterelektronenmikroskop deutlich erkennbare Spiegelflächen gekennzeichnet.

Die erfindungsgemässen $Al_xFe_{2-x}O_3$-Pigmente finden in Lackierungen, Beschichtungen und Kunststoffeinfärbungen Verwendung, so z.B. bei der Pigmentierung von Automobillacken mit Metallic-Effekt, von Kunststoffspritzgussteilen oder in Polyethylenfolien. Sie können auch als Dekorpigmente in Kunststoffen und Glas eingesetzt werden sowie in Anstrichfarben und als Korrosionsschutzpigment Verwendung finden.

*Beispiel 1:*

Eine gut gerührte Mischung aus 7,5 g α-FeOOH, 12 g Natriumaluminat, 3 g NaOH und 150 g Wasser wird in einen 300 ml fassenden Autoklaven gegeben und unter Rühren innerhalb von 15 min auf 320°C gebracht. Nach 20 min, währenddessen weiter gerührt wird, wird abgekühlt. Das feste Produkt wird von der alkalischen Lösung abgetrennt und mit heissem Wasser gewaschen, bis das Wasser alkalifrei ist. Anschliessend wird das Produkt im Trockenschrank bei 110°C getrocknet und in einer Labormühle gemahlen.

Das erhaltene Pigment hat rotviolette Farbe und besteht aus plättchenförmigen Kristallen, die, wie das Rasterelekronenmikroskop zeigt, einen mittleren Flächendurchmesser von 9 μ aufweisen und eine mittlere Dicke von 0,3 μ haben. Die nasschemische Analyse ergibt einen Aluminiumgehalt von 1,5 Gew.-% und einen Eisengehalt von 68,0 Gew.-%. Darüber hinaus befinden sich keine nennenswerten stofflichen Verunreinigungen im Pigment. Eine Nachbehandlung des gewaschenen Pigmentes mit 3N Natronlauge bei 300°C für 30 min zur Ablösung evtl. anhaftenden Aluminiumhydroxids oder -oxids ergibt keine Erniedrigung des Aluminiumgehaltes, so dass gefolgert werden darf, dass Aluminium- und Eisenoxid als einheitliche Mischphase vom Typ $Al_{0,08}Fe_{1,92}O_3$ vorliegen. Die Röntgenaufnahme kann einheitlich indiziert werden (Korundstruktur).

Das Pigment wird mit einem Alkyl-/Melaminharz (DIN-Entwurf 53 238) auf einer Tellerausreibemaschine angerieben und die Dispersion anschliessend auf einer Unterlage abgerakelt, wobei ein pigmentierter Lackfilm mit deutlichem Metallic-Effekt erhalten wird.

Auffallend ist die Helligkeit und der hohe Glanz der pigmentierten Beschichtung. Mit einem käuflichen Farbmessgerät (Hunterlab) werden folgende Werte an dem mit 10 Gew.-% $Al_{0,08}Fe_{1,92}O_3$-pigmentierten, 100 μ dicken Lackfilm nach dem Cielab-Farbsystem gemessen: Helligkeit $L^+ = 32,0$, Buntheit $C_{ab} = 19,9$, Farbwinkel $H^o = 33,6$. Wird die Plättchenstruktur des Pigmentes durch 70stündiges scharfes Mahlen in einer Kugelmühle zerstört, so zeigen die entsprechenden Lackfilme einen dunkleren Farbton und den Verlust des Glanzes. Entsprechende Messungen mit dem Farbmessgerät an gemahlenem Produkt ergibt den Helligkeitswert $L^* = 26,2$. Buntheit $C^*_{ab} = 38,7$, Farbwinkel $H^o = 42,8$.

*Beispiel 2:*

15 g α-FeOOH, 8 g $Al(OH)_3$, 8,4 g KOH und 150 ml $H_2O$ werden in einen 300 ml fassenden Rührautoklaven gefüllt und nach einer Aufheizzeit von 15 min 14 min lang bei 300°C belassen. Danach wird abgekühlt, das Produkt wird dem Autoklaven entnommen, mit 150 ml heisser, 1N NaOH 30 min lang behandelt, anschliessend alkalifrei gewaschen, filtriert, getrocknet und in einer Labormühle gemahlen. Das erhaltene Pigment zeigt einen rotgelben Farbton und starken Glanz. Wie rasterelektronenmikroskopische Aufnahmen zeigen, beträgt der mittlere Durchmesser in der Ebene 2 μ und die mittlere Dicke der Plättchen 0,1 μ. Die chemische Analyse ergibt Werte, die der Formel $Al_{0,2}Fe_{1,8}O_3$ entsprechen (Fe-Gehalt 66,9 Gew.-%, Al-Gehalt 2,9 Gew.-%). Röntgenographisch ist das Produkt hexagonal indizierbar und weist stark ausgeprägte Orientierungseffekte bei den Linienintensitäten auf.

Ein 100 μ starker, mit 10 Gew.-% Pigment pigmentierter, auf einer Unterlage abgerakelter Lackfilm zeigt die folgenden farbmetrischen Werte: Helligkeit $L^* = 42,5$, Buntheit $C^*_{ab} = 28,0$, Farbwinkel $H^o = 45,5$. Wird das Pigment 70 h lang in einer Laborkugelmühle gemahlen, dann ergibt ein entsprechend hergestellter Lackfilm die farbmetrischen Werte $L^+ = 32,9$, $C_{ab} = 45,8$, $H^o = 52,1$.

Wird das nach Beispiel 2 hergestellte Pigment auf an sich bekannte Weise in eine Weiss-PVC-Mischung eindispergiert, so lassen sich aus dieser Mischung hellbraune glänzende Folien und Beschichtungen herstellen.

*Beispiele 3 bis 15:*

Weitere, analog Beispiel 1 durchgeführte Beispiele sind in den folgenden Tabellen zusammengefasst.

*(Tabellen auf der nächsten Seite)*

Wie Tabelle 1a zeigt, gelingt es, allein durch Variation der Konzentration der Alkalilauge in der eingesetzten Suspension Produkte zu erzeugen, die sich stofflich, in ihrer Teilchengrösse und vor allem hinsichtlich ihres Farbtons erheblich voneinander unterscheiden. Der Farbton reicht von kupferfarben bis violett. Tabelle 1b zeigt, dass durch Variation der Menge des eingesetzten Aluminiumhydroxids bei sonst konstanten Bedingungen ebenfalls $Al_xFe_{2-x}O_3$-Pigmente entstehen, die sich erheblich hinsichtlich ihrer stofflichen Zusammensetzung ihrer Teilchenform und ihres Farbtons voneinander unterscheiden. Auch hier reicht die Spannbreite des Farbtons von kupferfarben bis violett.

Neben den sehr unterschiedlichen Farbtönen zeigen alle Produkte relativ hohe Helligkeitswerte, wie dies für plättchenförmige Pigmente charakteristisch ist. Visuell äussert sich dies in hervorragendem Glanzverhalten und rechtfertigt die Klassifizierung der Pigmente als Effektpigmente.

*Tabelle 1*

Herstellung von plättchenförmigem $Al_xFe_{2-x}O_3$-Pigment mit verschiedenen Farbtönen

| Beispiel | Einwaage (g) | | | | Reaktions-zeit (min) | Reaktions-temp. (°C) | Produkt-zusammensetzung | Geometrie der Plättchen | | Farbwerte | | | Farbe (visuell) |
|---|---|---|---|---|---|---|---|---|---|---|---|---|---|
| | FeOOH | Al(OH)₃ | NaOH | $H_2O$ | | | | Ø (µ) | d (µ) | L* | C*ab | H° | |
| a) 3 | 15 | 10 | 6 | 150 | 40 | 330 | $Al_{0,2}Fe_{1,8}O_3$ | 2 | 0,1 | 46,1 | 34,2 | 51,9 | kupferfarben |
| 4 | 15 | 10 | 8 | 150 | 40 | 330 | $Al_{0,13}Fe_{1,87}O_3$ | 4 | 0,2 | 38,4 | 27,1 | 40,9 | rotgelb |
| 5 | 15 | 10 | 10 | 150 | 40 | 330 | $Al_{0,09}Fe_{1,91}O_3$ | 7 | 0,3 | 33,5 | 22,3 | 32,4 | rot |
| 6 | 15 | 10 | 12 | 150 | 40 | 330 | $Al_{0,08}Fe_{1,91}O_3$ | 10 | 0,4 | 32,7 | 17,4 | 22,1 | violett |
| b) 7 | 9,24 | 2 | 6 | 150 | 15 | 330 | $Al_{0,02}Fe_{1,98}O_3$ | 7 | 0,5 | 32,4 | 15,5 | 25,5 | violett |
| 8 | 9,24 | 4 | 6 | 150 | 15 | 330 | $Al_{0,09}Fe_{1,91}O_3$ | 9 | 0,3 | 41,0 | 25,1 | 38,9 | rotviolett |
| 9 | 9,24 | 6 | 6 | 150 | 15 | 330 | $Al_{0,12}Fe_{1,88}O_3$ | 10 | 0,2 | 46,3 | 31,9 | 45,6 | gelbrot |
| 10 | 9,24 | 8 | 6 | 150 | 15 | 330 | $Al_{0,16}Fe_{1,84}O_3$ | 12 | 0,2 | 47,9 | 34,1 | 50,3 | kupferfarben |

*Tabelle 2*

Herstellung von plättchenförmigem $Al_xFe_{2-x}O_3$-Pigment mit ähnlichem Farbton

| Beispiel | Einwaage (g) | | | | Reaktions-zeit (min) | Reaktions-temp. (°C) | Produkt-zusammensetzung | Geometrie der Plättchen | | Farbwerte | | | Farbe (visuell) |
|---|---|---|---|---|---|---|---|---|---|---|---|---|---|
| | FeOOH | Al(OH)₃ | NaOH | $H_2O$ | | | | Ø (µ) | d (µ) | L* | C*ab | H° | |
| a) 11 | 15 | 5 | 3 | 150 | 40 | 330 | $Al_{0,15}Fe_{1,85}O_3$ | 1,5 | 0,1 | 42,1 | 32,5 | 47,0 | kupferfarben |
| 12 | 15 | 20 | 12 | 150 | 40 | 330 | $Al_{0,20}Fe_{1,80}O_3$ | 6 | 0,2 | 43,5 | 32,0 | 50,6 | kupferfarben |
| 13 | 15 | 40 | 24 | 150 | 40 | 330 | $Al_{0,22}Fe_{1,78}O_3$ | 10 | 0,2 | 44,2 | 35,8 | 49,6 | kupferfarben |
| b) 14 | 15 | 10 | 8 | 150 | 40 | 330 | $Al_{0,13}Fe_{1,87}O_4$ | 4 | 0,2 | 38,4 | 27,1 | 40,9 | rotgelb |
| 15 | 15 | 8 | 6 | 150 | 40 | 330 | $Al_{0,14}Fe_{1,87}O_3$ | 7 | 0,35 | 38,1 | 26,5 | 40,6 | rotgelb |

In Tabelle 2 ist aufgezeigt, dass nach dem erfindungsgemässen Verfahren nicht nur plättchenförmige $Al_xFe_{2-x}O_3$-Pigmente mit sehr unterschiedlichem Farbton, sondern auch Pigmente mit einem im wesentlichen gleichen Farbton, aber mit unterschiedlichen Plättchengeometrien, vor allem mit unterschiedlichen Plättchendurchmessern, gezielt hergestellt werden können. In dieser Tabelle ist besonders auf die kupferfarbenen und gelbroten Produkte, welche wegen ihrer grösseren Eignung zum Überfärben mit organischen Farbstoffen in Lacken technisch besonders interessieren, eingegangen. Die Ergebnisse zeigen, dass $Al_xFe_{2-x}O_3$-Pigmente mit ähnlichem Farbton, aber sehr unterschiedlichen Plättchendurchmessern durch gleichzeitige Variation der $Al(OH)_3$-Konzentration und der NaOH-Konzentration bei den Einsatzstoffen hergestellt werden können.

## Patentansprüche

1. Plättchenförmige Pigmente auf Basis von Eisenoxid der Formel $Al_xFe_{2-x}O_3$, in der x einen Wert von 0,02 bis 0,5 hat.

2. Verfahren zur Herstellung der Pigmente nach Anspruch 1, dadurch gekennzeichnet, dass man eine Eisen(III)hydroxid bzw. -oxidhydrat enthaltende wässerige Suspension in Gegenwart von Alkalihydroxid und/oder -carbonat sowie gelöstem Alkalialuminat bei Temperaturen oberhalb von 170°C einer hydrothermalen Behandlung unterzieht, mit der Massgabe, dass je Grammatom Fe in der Suspension mindestens 0,2 mol gelöstes Aluminat vorliegen und anschliessend das erhaltene Pigment von der Reaktionslösung abtrennt.

3. Verfahren nach Anspruch 2, dadurch gekennzeichnet, dass die Suspension in bezug auf die Alkalihydroxide und/oder -carbonate eine Normalität von 0,02-15 aufweist.

4. Verfahren nach den Ansprüchen 2 und 3, dadurch gekennzeichnet, dass die Temperatur 250-360°C beträgt.

5. Verfahren nach den Ansprüchen 2 und 3, dadurch gekennzeichnet, dass die Suspension je Grammatom Fe bis zu 5 mol gelöstes Alkalialuminat enthält.

6. Verwendung der Pigmente nach den Ansprüchen 1 bis 5 für die Einfärbung von dekorativen oder korrosionsschützenden Beschichtungen, Gläsern und Kunststoffen.

## Claims

1. A flaky pigment based on iron oxide of the formula $Al_xFe_{2-x}O_3$ where x is from 0.02 to 0.5.

2. A process for the preparation of a pigment as claimed in Claim 1, wherein an aqueous suspension containing iron(III) hydroxide or iron(III) oxide hydrate is treated hydrothermally in the presence of an alkali metal hydroxide and/or carbonate and of a dissolved alkali metal aluminate at above 170°C, with the proviso that not less than 0.2 mol of dissolved aluminate is present per gram-atom of iron in the suspension, and the resulting pigment is then isolated from the reaction solution.

3. A process as claimed in Claim 2, wherein the suspension is 0.02-15 normal with respect to the alkali metal hydroxide and/or carbonate.

4. A process as claimed in Claim 2 or 3, wherein the temperature is 250-360°C.

5. A process as claimed in Claim 2 or 3, wherein the suspension contains not more than 5 mol of dissolved alkali metal aluminate per gram-atom of iron.

6. The use of a pigment according to Claims 1 to 5 for coloring decorative or anti-corrosion coatings, glass and plastics.

## Revendications

1. Pigments en forme de plaquettes à base d'oxyde de fer de la formule $Al_xFe_{2-x}O_3$, dans laquelle x possède une valeur de 0,02 à 0,5.

2. Procédé de préparation de pigments selon la revendication 1, caractérisé en ce que l'on soumet une suspension aqueuse contenant de l'hydroxyde ferrique ou de l'hydrate d'oxyde ferrique, un hydroxyde et/ou un carbonate de métal alcalin et un aluminate de métal alcalin dissous à un traitement hydrothermique à des températures supérieures à 170°C, la suspension contenant au moins 0,2 mol d'aluminate dissous par atome-gramme de fer, le pigment formé étant ensuite séparé de la solution réactionnelle.

3. Procédé selon la revendication 2, caractérisé en ce que la suspension est entre 0,02 et 0,15 normale en hydroxyde et/ou en carbonate de métal alcalin.

4. Procédé selon les revendications 2 et 3, caractérisé en ce que la température est comprise entre 250 et 360°C.

5. Procédé selon les revendications 2 et 3, caractérisé en ce que la suspension contient jusqu'à 5 mol d'aluminate de métal alcalin dissous par atome-gramme de fer.

6. Utilisation de pigments selon les revendications 1 à 5 pour la coloration dans la masse de revêtements décoratifs ou anticorrosifs, de verres et de matières plastiques.